# EUROPÄISCHE PATENTANMELDUNG

(11) **EP 1 468 794 A1**
(43) Veröffentlichungstag der Anmeldung: **20.10.2004**
(21) Anmeldenummer: 03008647.4
(22) Anmeldetag: 15.04.2003
(51) Int. Cl.: B26D 7/08, B26D 7/20, B26F 1/40

(54) **Vorrichtung und Verfahren zum Anbringen von Öffnungen in Formteilen mit einer Ultraschallquelle**

(71) Anmelder: Telsonic Holding AG, 9552 Bronschhofen (CH)
(72) Erfinder: Köchli, Kurt, 9536 Schwarzenbach (CH); Lang, Georg, 97855 Triefenstein (DE)
(74) Vertreter: Müller, Christoph Emanuel

(57) **Zusammenfassung**

In einer Vorrichtung zum Anbringen von Öffnungen (3) in Formteilen (2), insbesondere in Kunststoffstossstangen wird eine Öffnung (3) mit wenigstens einem Stanzwerkzeug (4) ausgestanzt z.B. gegen ein Gegenlager. Die Vorrichtung (1) ist mit einer Ultraschallquelle (6) versehen, mittels welcher das Stanzwerkzeug (4) und/oder das Gegenlager (5) mit Ultraschallschwingungen (S) beaufschlagbar sind.

## Beschreibung

Die Erfindung betrifft eine Vorrichtung und ein Verfahren zum Anbringen von Öffnungen in Formteilen gemäss den Merkmalen des Oberbegriffs der unabhängigen Patentansprüche.

Formteile wie z.B. Autostossstangen werden heute in der Regel aus Kunststoff hergestellt. Die Wandstärke von solchen Formteilen liegt typischerweise im Bereich von 1,5 bis 5 mm. Die Aussenseite der Stossstange wird dabei häufig nach dem Spritzen lackiert. Es ist bekannt, in der Stossstange verschiedene Durchbrüche einzubringen, beispielsweise für Spritzdüsen, Scheinwerfer, Abstandssensoren oder Ähnliches. Diese Durchbrüche sind häufig typenabhängig. Daher ist es aus logistischen Gründen vorteilhaft diese Durchbrüche erst kurz vor der Endmontage einzubringen.

Es ist bekannt, solche Durchbrüche durch mechanisches Stanzen oder durch Fräsen zu erzeugen.

Diese bekannten Verfahren sind aber alle mit bestimmten Nachteilen behaftet. Beispielsweise erleidet die Lackschicht um den Durchbruch herum aufgrund der mechanischen Beanspruchung beim Stanzvorgang teilweise Haarrisse. Der Lack kann abblättern oder kann sich im Laufe der Zeit, beispielsweise aufgrund von Waschzyklen, ablösen. Ausserdem ist es bei diesem bekannten Stanzoder Fräsverfahren nur möglich, genau senkrecht zur Oberfläche verlaufende Begrenzungsränder der Durchbrüche anzubringen. Insbesondere ist es nicht möglich, auf der Aussenseite des Formteils im Bereich der Begrenzungen der Durchbruche Abrundungen anzubringen. Es ist ausserdem auch nicht möglich, auf der Innenseite der Formteile von der geraden Form der eingestanzten Durchbrüche abweichende Konturen vorzusehen.

Die Aufgabe der vorliegenden Erfindung besteht darin, die Nachteile des Bekannten zu vermeiden, insbesondere also eine Vorrichtung und ein Verfahren zum Anbringen von Öffnungen in Formteilen zu schaffen, mit welchen Öffnungen oder Durchbrüche in Formteile auch bei bereits lackierten Formteilen problemlos eingebracht werden können ohne dass dabei die Gefahr der Erzeugung von Haarrissen oder anderen Beschädigungen der Lackschicht besteht. Eine weitere Aufgabe der Erfindung besteht darin, eine Vorrichtung und ein Verfahren zu schaffen, mittels welchen sich in einem Stanzvorgang im Bereich der Durchbrüche Radien am Formteil anbringen lassen und welche es ermöglichen, auf der Innenseite der Formteile von einer geraden Form abweichende Konturen anzubringen. Die erfindungsgemässe Vorrichtung soll ausserdem einfach und kostengünstig herstellbar sein. Das erfindungsgemässe Verfahren soll es erlauben, auf einfache und kostengünstige Weise Durchbrüche in Formteilen zu erzeugen. Insbesondere sollen die Stanzzeiten und die zum Stanzen benötigte Kraft reduziert werden. Erfindungsgemäss werden diese Aufgaben mit einer Vorrichtung und mit einem Verfahren mit den Merkmalen des kennzeichnenden Teils der unabhängigen Patentansprüche gelöst.

Die Vorrichtung gemäss der Erfindung dient zum Anbringen von Öffnungen in Formteilen. Insbesondere eignet sich die Vorrichtung zum Anbringen von Öffnungen in Kunststoffformteilen, beispielsweise Kunststoffstossstangen. Die Vorrichtung weist wenigstens ein Stanzwerkzeug und optional wenigstens ein Gegenlager auf. Bei Teilen mit genügender Eigensteifigkeit kann von einer Seite her ohne Gegenlager gestanzt werden. Mit dem Stanzwerkzeug kann die Öffnung oder der Durchbruch (im Folgende stets Öffnung genannt) gegen das Gegenlager ausgestanzt werden. Um unter anderem die mechanischen Beanspruchungen des Formteils während dem Stanzvorgang zu reduzieren, ist die Vorrichtung mit einer Ultraschallquelle versehen, mittels welcher das Stanzwerkzeug und/oder das Gegenlager während dem Stanzvorgang mit Ultraschallschwingungen beaufschlagbar ist. Die Beaufschlagung mit Ultrschallschwingungen führt zu verschiedenen Vorteilen. Durch Anwendung von Ultraschall lassen sich die Öffnungen sehr sauber erzeugen. Aufgrund der eingebrachten Ultraschallvibration ergibt sich zwischen dem Formteil und dem Stanzwerkzeug und/oder einem Gegenlager eine Grenzflächenreibung mit einer Schwingungsamplitude im Mikrometer-Bereich. Dies führt zu einer lokal begrenzten Erwärmung. Daher ist es auch möglich, den Kunststoff im Bereich der auszustanzenden Öffnung minimal aufzuschmelzen. Dadurch werden sehr saubere Oberflächen erzeugt.

Die Stanzzeiten sind ausserdem im Vergleich zu herkömmlichen Stanzverfahren sehr kurz. Typische Stanzzeiten liegen erfindungsgemäss im Bereich einer Sekunde. Im Vergleich zum konventionellen, rein mechanischen Stanzen ist auch die erforderliche, einzubringende Kraft erheblich geringer, typischerweise um einen Faktor 10. Dadurch sind kleinere Bauformen der Werkzeuge möglich.

Gemäss einer bevorzugten Ausführungsform der Erfindung ist sowohl das Gegenlager als auch das Stanzwerkzeug gleichzeitig mit Ultraschall beaufschlagbar. Es ist aber auch denkbar, nur das Gegenwerkzeug oder nur das Stanzwerkzeug mit Ultraschall zu beaufschlagen.

Das Gegenlager ist vorzugsweise flach ausgebildet. Es kann aber auch mit einem dem Stanzwerkzeug angepassten Profil versehen sein. Bei einer solchen Ausführungsform lassen sich auf der Innenseite des Formteils von der geraden Form abweichende Konturen realisieren. Dies ist insbesondere aufgrund der durch die Ultraschallschwingung erzeugten lokalen Erwärmung im Bereich des Randes der auszustanzenden Öffnung möglich. Bei dieser Ausführungsform ist es daher besonders bevorzugt, auch das Gegenlager direkt mit Ultraschallschwingungen zu beaufschlagen.

Gemäss einem weiteren bevorzugten Ausführungsbeispiel weist das Stanzwerkzeug eine Stanzschneide auf, die auf ihrer Aussenseite einen Radius mit einer konkaven oder konvex Krümmung aufweist. Dadurch ist es möglich, an der Oberfläche des Formteils im Bereich des Randes der auszustanzenden Öffnungen beim Stanzen Radien zu erzeugen.

Die erfindungsgemässe Vorrichtung kann ausserdem mit einer Ausstossvorrichtung versehen sein. Die Ausstossvorrichtung dient zum Ausstossen des Stanzlings. Die Ausstossvorrichtung kann am Gegenlager oder am Stanzwerkzeug vorgesehen sein.

Die Ultrschallquelle ist typischerweise in bekannter Art und Weise aufgebaut und weist einen Ultraschallwandler (Konverter) auf. Typische Ultraschallwandler bestehen aus piezoelektrischen Elementen. Am Ultraschallwandler ist gemäss einer bevorzugten Ausführungsform ein Amplitudentranformator vorgesehen, der die für die betreffende Anwendung geeignete Schwingungsamplitude erzeugt. Die Ultraschallschwingungen werden auf das Formstück und/oder das Gegenlager mittels einer Sonotrode übertragen. Die Sonotrode ist gleichzeitig das Stanzwerkzeug und/oder Gegenlager.

Die Erzeugung der Schwingungen erfolgt z.B. in Richtung der Stanzbewegung. Es ist aber auch denkbar, z.B. Schwingungen in einer Ebene senkrecht zur Vorschubrichtung des Stanzwerkzeugs zu erzeugen, z.B. torsionale Schwingungen.

Das erfindungsgemässe Verfahren dient zum Anbringen von Öffnungen in Formteilen. Insbesondere lässt sich das Verfahren zum Einbringen von Öffnungen in Kunststoffstossstangen einsetzen. Mittels wenigstens einem Stanzwerkzeug wird die Öffnung, optional gegen wenigstens ein Gegenlager, ausgestanzt. Erfindungsgemäss wird das Stanzwerkzeug und/oder das optionale Gegenlager während dem Stanzvorgang wenigstens während einem Teil der Zeit, vorzugsweise während der ganzen Zeit mit Ultraschallschwingungen beaufschlagt. Damit lassen sich die vorstehend beschriebenen Vorteile erzeugen.

Gemäss einer bevorzugten Ausführungsform wird das Formteil während dem Stanzvorgang im Randbereich der auszustanzenden Öffnung wenigstens teilweise erwärmt sodass es plastisch verformbar wird. Das Formteil wird anschliessend während dem Stanzvorgang im erwärmten Randbereich umgeformt, sodass vorzugsweise Radien erzeugt werden. Die Umformung kann auf der Aussenseite und/oder auf der Innenseite des Formteils erfolgen. Wie vorstehend beschrieben erfolgt die Anwendung des erfindungsgemässen Verfahrens vorteilhaft auf bereits vorlackierten Formteilen typischerweise vorlackierten Kunststoffstossstangen.

Ein weiterer Aspekt der Erfindung besteht darin, dass Ultraschallschwingungen verwendet werden können, um bei einem Stanzvorgang die Qualität der Oberfläche im Randbereich der ausgestanzten Öffnung zu verbessern und/oder um den Randbereich lokal zu erwärmen und dabei zu plastifizieren. Die Erfindung wird im Folgenden in Ausführungsbeispielen und anhand der Zeichnungen näher erläutert. Es zeigen:
- Figur 1: schematische Darstellung einer ersten Ausführungsform der erfindungsgemässen Erfindung im Querschnitt,
- Figur 2: schematische Darstellung einer alternativen Ausführungsform der Erfindung im Querschnitt,
- Figur 3: schematische Darstellung eines Formteils mit eingebrachtem Durchbruch im Querschnitt,
- Figur 4: vergrösserte Darstellung des Stanzwerkzeugs gemäss der Ausführungsform von Figur 2, und
- Figur 5: schematische Darstellung einer erfindungsgemässen Ultraschallquelle.

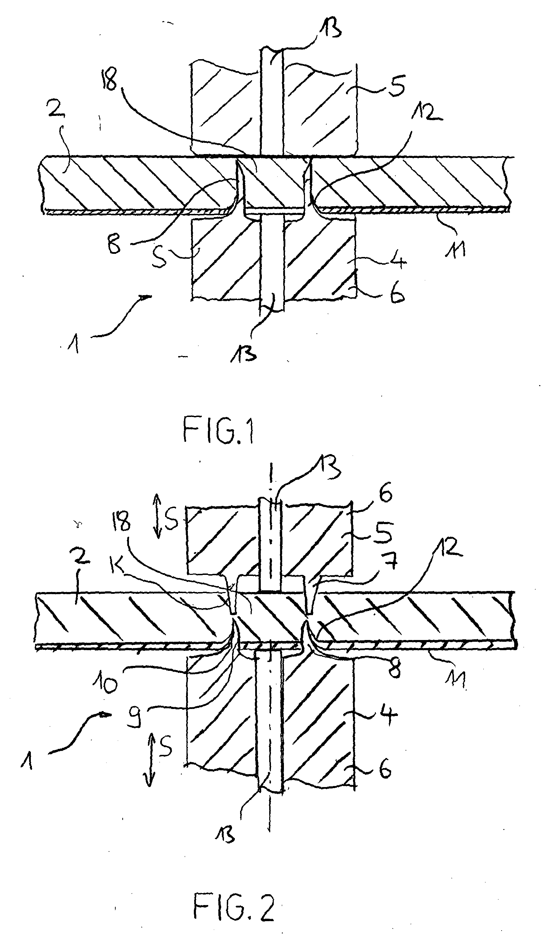

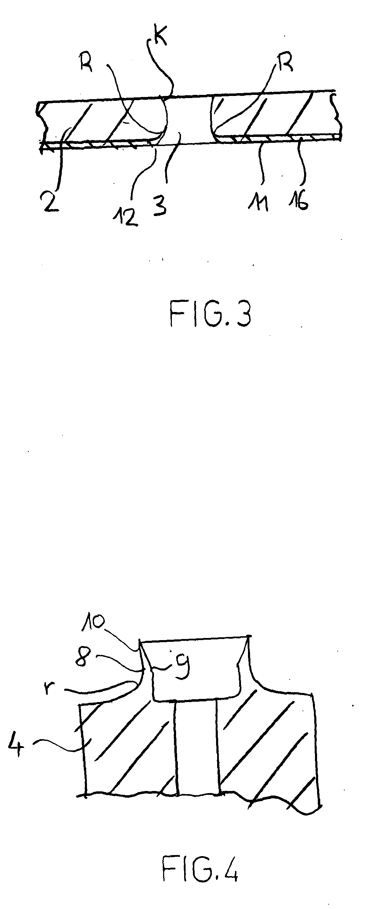

Figur 1 zeigt eine Vorrichtung 1, welche zum Einbringen von Öffnungen in Formteile 2 dient. Die Formteile 2 sind beispielsweise Kunststoffstossstangen. Die Formteile 2 sind an ihrer Oberfläche 11 mit einer Lackschicht 16 (siehe Figur 3) versehen. Zum Einbringen von Öffnungen 3 (siehe Figur 3) in die Formteile 2 weist die Vorrichtung 1 ein Stanzwerkzeug 4 auf, das in an sich bekannter Art und Weise ausgebildet ist. Das Stanzwerkzeug 4 weist eine Stanzschneide 8, mittels welcher eine Öffnung 3 im Formteil 2 einstanzbar ist. Das Stanzwerkzeug 4 wird gegen ein Gegenlager 5 gedrückt, sodass ein Stanzling 18 ausgestanzt werden kann. Auf das Gegenlager kann bei steifen Teilen auch verzichtet werden. Zum Ausstossen des Stanzlings 18 sind Ausstossvorrichtungen 13 im Stanzwerkzeug 4 und/oder im Gegenlager 5 vorgesehen. Das Stanzwerkzeug 4 ist mit einer in Figur 1 nicht im Detail gezeigten Ultraschallquelle mit Ultraschallschwingungen S beaufschlagbar, sodass das Stanzteil 4 auch eine Sonotrode 6 ist. Es werden Ultraschallschwingungen S mit einer Frequenz von typischerweise 20 kHz auf das Stanzwerkzeug 4 übertragen. Gemäss dem Ausführungsbeispiel in Figur 1 ist das Gegenlager 5 mit einer flachen Oberfläche versehen. Das Gegenlager 5 liegt fest und wird nicht direkt mit Ultraschallschwingungen beaufschlagt.

Im Unterschied zum Ausführungsbeispiel gemäss Figur 1 ist in Figur 2 auch das Gegenlager 5 mit einem Profil 7 versehen. Die Form des Profils 7 ist der Form der Stanzschneide 8 angepasst, sodass wahrend dem Stanzvorgang die Stanzschneide 8 benachbart zum Profil 7 des Gegenlager 5 in das Formteil 2 eindringt, wodurch der Stanzling 18 erzeugt wird. Damit eine Konusform im Bereich der Innenseite des Formteils 2 (d.h. im Bereich der dem Gegenlager 5 zugewandten Seite) erzeugt werden kann, ist das Profil 7 auf der Aussenseite mit einer Konusfläche K versehen.

Die Stanzschneide 8 des Stanzwerkzeugs 4 ist ausserdem auf ihrer Aussenseite 10 mit einem Radius r (siehe auch Figur 4) versehen.

Aufgrund der in das Stanzwerkzeug 4 eingeleiteten Ultraschallschwingungen S kommt es im Bereich der Stanzschneide 8 zu Vibrationen im Mikrometerbereich, welche das Formteil 2 im Bereich des Rands 12 um den Stanzling 18/ein die zu formende Öffnung 3 lokal erwärmt und verformbar macht. Aufgrund des Radius r (welcher nicht genau kreisförmig sein muss) am Stanzwerkzeug 4 wird die Oberfläche 11 des Formteils 2 im Bereich des Randes 12 der Öffnung 3 umgeformt, sodass sich am Formteil 2 ein Radius R mit einer konvexen Wölbung bildet (Figur 3). Zu diesem Zweck ist die Wölbung des Radius r am Stanzwerkzeug 4 konkav ausgebildet.

Die Innenseite 9 der Stanzschneide 8 ist herkömmlich ausgebildet.

Gemäss dem Ausführungsbeispiel in Figur 2 sind sowohl das Stanzwerkzeug 4 als auch das Gegenlager 5 mit Ulraschallschwingungen S beaufschlagt, sodass sowohl das Stanzwerkzeug 4 als auch das Gegenlager 5 als Sonotroden 6 dienen. In Figur 3 ist das Formteil 2 mit ausgestanzter Öffnung 3 gezeigt. Die Lackschicht 16 an der Oberfläche 11 weist im Randbereich 12 einen Radius R auf. Auf der gegenüberliegenden Seite ist eine Konuskontur K in die Öffnung 3 eingebracht. Selbstverständlich sind auch andere Konturen oder Formen in diese, der lackierten Schicht gegenüberliegende Seite einbringbar, beispielsweise auch Markierungsrillen. Das Formteil besteht aus einem Thermoplasten, beispielsweise aus Polypropylen, der bei ca. 200-400°C plastisch verformbar wird.

In Figur 4 ist in vergrösserter Darstellung das Stanzwerkzeug 4 aus Figur 2 gezeigt. Der Radius r ist konkav ausgebildet und dient zum Bilden der in Figur 3 gezeigten Radien R am Formteil 2.

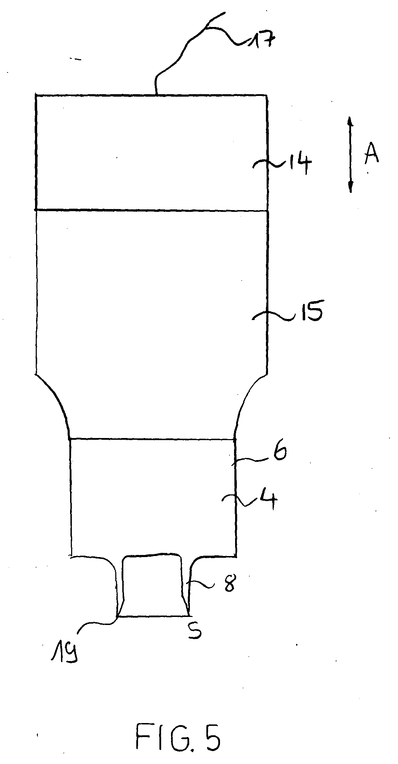

In Figur 5 ist schematisch die Vorrichtung zur Erzeugung von Ultraschall gezeigt. Das als Sonotrode 6 ausgebildete Stanzwerkzeug 4 ist über einen Amplitudentransformer 15 mit einem Ultraschallkonverter 14 verbunden. Der Ultraschallkonverter 14 ist in bekannte Weise mit einer Vielzahl von nicht näher gezeigten piezoelektrischen Elementen aufgebaut, welche die Vorrichtung in Richtung A in Schwingung versetzen. Der Ultraschallkonverter ist mit einem nicht gezeigten Ultraschallgenerator über ein Kabel 17 verbunden. Das Stanzwerkzeug 4 arbeite als Sonotrode und ist typischerweise so ausgebildet, dass in Achsrichtung A im Bereich der Spitze 19 der Stanzschneide 8 maximale Amplituden erzeugt werden. Die Länge des Stanzwerkzeugs 4 ist daher typischerweise als Vielfaches der halben Wellenlänge 3 der eingeleiteten Ultaschallschwingungen ausgebildet. Die Dimensionierung von Sonotrode und Amplitudentransformationsstück sind für den Fachmann aus anderen Ultraschallanwendung, beispielsweise dem Schweissen, bekannt. Sie werden hier nicht im Detail beschrieben.

Die aus Ultraschallkonverter, Amplitudentransformationsstück 15 und Stanzwerkzeug 4 gebildete Vorrichtung ist ausserdem befestigt, dass sie zum Stanzen in Richtung des in Figur 5 nicht gezeigten Gegenwerkzeugs bewegt werden kann (in Pfeilrichtung A). Dazu ist die Vorrichtung in einer geeigneten Anordnung gehalten. Die Halterung erfolgt typischerweise in einem Schwingungsnullpunkt der Vorrichtung. Solche Halterungen sind dem Fachmann aus anderen Ultraschallanwendungen ebenfalls bekannt.

Die Beaufschlagung des Gegenlagers 5 mit Ultraschallschwingungen S erfolgt in ähnlicher Weise wie in Figur 5 gezeigt. Im Rahmen der Erfindung ist es denkbar, ein oder mehrere Stanzwerkzeuge und ein oder mehrere Gegenlager mit Ultraschallschwingungen zu beaufschlagen. Es kann sowohl nur das Stanzwerkzeug 4, nur das Gegenlager, oder sowohl das Stanzwerkzeug 4 als auch das Gegenlager 5 mit Schwingungen beaufschlagt werden.

## Patentansprüche

1. Vorrichtung (1) zum Anbringen von Öffnungen (3) in Formteile (2), insbesondere in Kunststoffstossstangen, mit wenigstens einem Stanzwerkzeug (4) und optional mit wenigstens einem Gegenlager (5), zum Ausstanzen der Offnung (3),
**dadurch gekennzeichnet, dass** die Vorrichtung (1) mit wenigstens einer Ultraschallquelle (6, 15, 14) versehen ist, mit der das Stanzwerkzeug (4) und/oder das Gegenlager (5) mit Ultraschallschwingen (S) beaufschlagbar ist.

2. Vorrichtung nach Anspruch 1, **dadurch gekennzeichnet, dass** das Gegenlager (5) eine flache Kontaktfläche aufweist.

3. Vorrichtung nach Anspruch 1, **dadurch gekennzeichnet, dass** das Gegenlager (5) mit einem der Stanzschneide (8) des Stanzwerkzeugs (4) angepassten Profil (7) versehen ist.

4. Vorrichtung nach einem der Ansprüche 1 bis 3, **dadurch gekennzeichnet, dass** das Stanzwerkzeug (4) eine Stanzschneide (8) aufweist, die auf der Aussenseite (10) einen Radius (r) mit einer konkaven oder konvexen Krümmung aufweist, sodass an der Oberfläche (11) des Formteils (2) des Randbereichs (12) der einzubringenden Öffnung (3) beim Stanzen Krümmung (r) erzeugbar sind.

5. Vorrichtung nach einem der Ansprüche 1 bis 4, **dadurch gekennzeichnet, dass** die Vorrichtung (1) mit einer Ausstossvorrichtung (13) zum Ausstossen eines Stanzling (18) versehen ist.

6. Vorrichtung nach einem der Ansprüche 1 bis 5, **dadurch gekennzeichnet, dass** die Ultraschallquelle (6, 15, 14) einen Ultraschallwandler (14) und einen Amplitudentransformator (15) aufweist.

7. Verfahren zum Anbringen von Öffnungen (3) in Formteilen (2), insbesondere in Kunststoffstossstangen, wobei mit wenigstens einem Stanzwerkzeug (4) die Öffnung (3), optional gegen wenigstens ein Gegenlager (5), ausgestanzt wird,
**dadurch gekennzeichnet, dass** das Stanzwerkzeug (4) und/oder das Gegenlager (5) während des Stanzvorgangs wenigstens zeitweise, vorzugsweise während dem ganzen Stanzvorgang mit Ultraschallschwingungen (S) beaufschlagt wird.

8. Verfahren nach Anspruch 7, **dadurch gekennzeichnet, dass** das Formteil (2) im Randbereich (12) der Öffnung (3) wenigstens teilweise erwärmt und plastisch verformbar gemacht wird und dass das Formteil (2) während dem Stanzvorgang im erwärmten Randbereich (12) umgeformt wird, wobei vorzugsweise Krümmung (R) erzeugt werden.

9. Verfahren nach Anspruch 8, **dadurch gekennzeichnet, dass** die Erwärmung durch Einleiten von Ultraschallenergie in den Randbereich (12) erfolgt.

10. Verfahren nach einem der Ansprüche 7 oder 8, **dadurch gekennzeichnet, dass** die Öffnungen (3) in vorlackierte Formteilen, insbesondere in vorlackierte Kunststoffstossstangen eingebracht werden.

11. Verwendung einer Ultraschallquelle (6, 14, 15) zur Unterstützung eines Stanzvorgangs, insbesondere zum lokalen Erwärmen eines Randbereichs (12) einer auszustanzenden Öffnung (3), insbesondere beim Ausstanzen von Öffnungen (3) in Kunststoffstossstangen (2).
